# NEUE EUROPÄISCHE PATENTSCHRIFT

(11) **EP 1 340 306 B2**
(45) Veröffentlichungstag und Bekanntmachung des Hinweises auf die Entscheidung über den Einspruch: **17.03.2010**
(45) Hinweis auf die Patenterteilung: 22.09.2004
(21) Anmeldenummer: 01997882.4
(22) Anmeldetag: 19.11.2001
(51) Int. Cl.: H02K 1/28

(54) **ANKER MIT BLECHLAMINATEN UND VERFAHREN ZUR HERSTELLUNG DIESES ANKERS**
ARMATURE WITH SHEET STEEL LAMINATES AND METHOD FOR THE PRODUCTION THEREOF
INDUIT EN LAMINE DE TOLE ET SON PROCEDE DE FABRICATION

(30) Priorität: 21.11.2000 DE 10057633
(43) Veröffentlichungstag der Anmeldung: 03.09.2003
(73) Patentinhaber: ROBERT BOSCH GMBH, 70442 Stuttgart (DE)
(72) Erfinder: FAUTH, Lothar, 77815 Buehl (DE); HAEFELE, Klaus-Dieter, 3300 Tienen (BE)
(86) Internationale Anmeldenummer: PCT/DE2001/004296
(87) Internationale Veröffentlichungsnummer: WO 2002/043222

(56) Entgegenhaltungen:
- DD- - 121 438
- DE-C- 942 528
- DE-U1- 7 610 783
- DE-U1- 8 907 902
- FR-A- 2 342 575
- JP-A- 2000 270 505
- US-A- 2 421 115

## Beschreibung

### Stand der Technik

Die Erfindung geht aus von einem Anker bzw. von einem Verfahren zur Herstellung eines Ankers nach der Gattung des Anspruchs 1 bzw. des Anspruchs 5.

Es ist bekannt, ein Blechpaket, bestehend aus mehreren Blechlaminaten, auf einer Rotorwelle durch Aufpressen zu fixieren, um einen Anker für eine elektrische Maschine herzustellen. Dabei besteht zwischen jedem Blechlaminat und der Rotorwelle ein Form- und Kraftschluß. Insbesondere bei einer großen Anzahl von Blechlaminaten, d.h. einem langen Blechpaket, ist es schwierig, diese in einem Schritt auf der Rotorwelle ohne Beschädigung von Blechlaminaten und/oder Rotorwelle zu befestigen. Dabei werden häufig sogenannte gestufte Rotorwellen verwendet, die in der Herstellung aufwendig und teurer sind.

Es ist weiterhin bekannt, ein Blechpaket auf einer Rotorwelle dadurch zu befestigen, daß nur ein Anfangsbereich und ein Endbereich, der zumindest jeweils ein Blechlaminat umfaßt, durch Verstemmen auf der Rotorwelle befestigt werden. Insbesondere bei langen Blechpaketen und hohen Drehmomenten kann es passieren, daß sich die Blechlaminate zwischen dem Anfangs- und Endbereich verschieben, weil die Haltekräfte im Blechpaket nicht ausreichend gross sind.

### Vorteile der Erfindung

Der erfindungsgemäße Anker bzw. das erfindungsgemässe Verfahren zur Herstellung eines Ankers mit den kennzeichnenden Merkmalen des Anspruchs 1 bzw. des Anspruchs 5 hat demgegenüber den Vorteil, daß auf einfache Art und Weise Blechlaminate auf einer Rotorwelle sicher befestigt sind.

Durch die in den abhängigen Ansprüchen aufgeführten Maßnahmen bzw. Verfahrnsschritte sind vorteilhafte Weiterbildungen und Verbesserungen des im Anspruch 1 bzw. 5 genannten Ankers bzw. genannten Verfahrens zur Herstellung eines Ankers möglich.

Um eine Befestigung zwischen Blechlaminat und der Rotorwelle herzustellen, ist es vorteilhaft, das Blechlaminat durch plastische Verformung des Blechlaminats auf der Rotorwelle zu befestigen.

Ein Vorteil für den Anker ergibt sich dadurch, daß die Rotorwelle einen durchgängigen Außendurchmesser aufweist, weil eine solche Rotorwelle einfach und billig herzustellen ist.

Vorteilhaft ist es, wenn die Blechlaminate ungefähr einen gleichen Innendurchmesser haben, weil dadurch die Anzahl der Typen von Blechlaminaten reduziert ist und keine Verwechslung von unterschiedlichen Blechlaminaten in der Reihenfolge bei ihrer Aufstapelung erfolgt.

### Zeichnung

Ein Ausführungsbeispiel der Erfindung ist in der Zeichnung vereinfacht dargestellt und in der nachfolgenden Beschreibung näher erläutert.

Es zeigen
Figur 1a, b und c, wie ein erfindungsgemäßer Anker, bestehend aus einer Rotorwelle und Modulen, hergestellt wird, und
Figur 2 einen erfindungsgemäßen Anker im axialen Querschnitt.

### Beschreibung des Ausführungsbeispiels

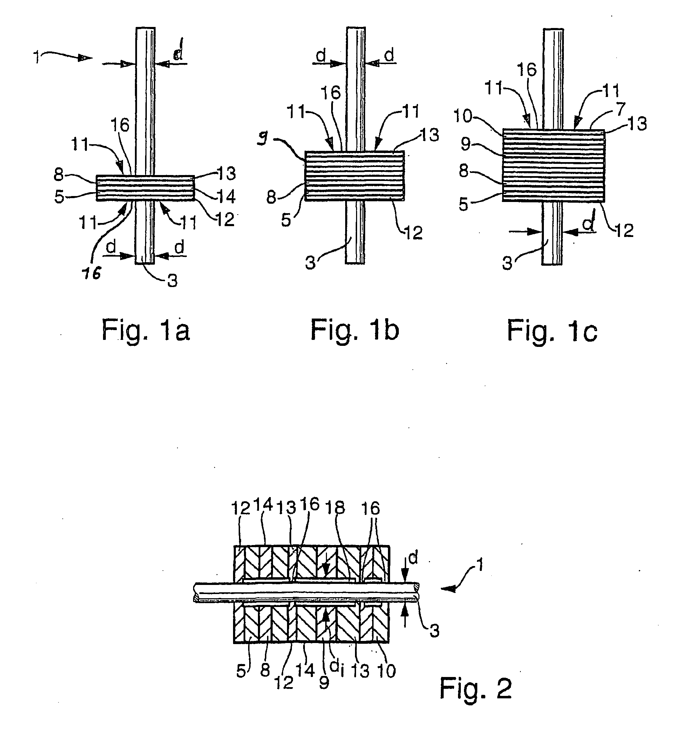

Figur 1a zeigt eine Rotorwelle 3 und mehrere Blechlaminate 5, die Teile eines erfindungsgemäßen Ankers 1 bilden. Ein solcher Anker 1 wird für eine elektrische Maschine, wie z.B. ein elektrischer Motor oder ein elektrischer Generator verwendet.
Mehrere Blechlaminate 5, die ein erstes Modul 8 bilden, werden auf der Rotorwelle 3 befestigt. Jedes Modul hat einen Anfangsbereich 12, einen mittleren Bereich 14 und einen Endbereich 13.
Die Befestigung kann auf verschiedene Art und Weise erfolgen, z.B. durch Aufpressen der Blechlaminate 5 mit einer Formbohrung auf die Rotorwelle 3, Aufpressen der Blechlaminate 5 mit einer Rundbohrung auf die gekerbte oder gerändelte Rotorwelle 3. Dabei haben die Blechlaminate 5 verschiedene Innendurchmesser di. Die Blechlaminate 5 des Anfangs- 12 und Endbereichs 13 haben einen kleineren Innendurchmesser di als die Blechlaminate 5 des mittleren Bereichs 14. Der Innendurchmesser di der Blechlaminate 5 im Anfangs- 12 und Endbereich 13 ist so ausgebildet, dass nur in diesen Bereichen 12, 13 eine Befestigung der Blechlaminate 5 auf der Rotorwelle 3 nach einem der oben beschriebenen Verfahren erfolgt.
Der mittlere Bereich 14 wird durch den in axialer Richtung wirkenden Kraftschluß zwischen Anfangsbereich 12 und Endbereich 13 gehalten.

Bei einer weiteren Art der Befestigung werden mehrere Blechlaminate 5, wobei alle Blechlaminate 5 im Rahmen der Toleranz den gleichen Innendurchmesser di aufweisen und ein erstes Modul 8 bilden, auf die Rotorwelle 3 aufgeschoben, wobei der Außendurchmesser d der Rotorwelle 3 und der Innendurchmesser di eines Durchgangslochs 18 der Blechlaminate 5 so gewählt ist, daß es zuerst zu keiner Befestigung kommt, d.h. eine Spielpassung vorliegt.
Die Rotorwelle 3 hat bspw. einen durchgängigen Außendurchmesser d.
An einer vorbestimmten Stelle der Rotorwelle 3 wird dann das erste Modul 8, das bspw. aus vier Blechlaminaten 5 gebildet ist, auf der Rotorwelle 3 befestigt. Das geschieht dadurch, daß nur in dem Anfangsbereich 12 und dem Endbereich 13 des ersten Moduls 8 eine Befestigung zwischen zumindest einem Blechlaminat 5 und Rotorwelle 3 hergestellt wird.
Dies kann wiederum auf verschiedene Arten erfolgen, wie zum Beispiel durch plastische Verformung der Rotorwelle 3 oder plastische Verformung der Blechlaminate 5 im Anfangsbereich 12 und Endbereich 13 (Fig. 1a), bei dem Material des jeweiligen Blechlaminats 5 auf die Rotorwelle 3 verschoben wird und zu einer Verstemmung auf der Rotorwelle 3 führt, oder durch Einbringen von Keilen zwischen Blechlaminat 5 und Rotorwelle 3 im Anfangs- 12 und Endbereich 13.

Die plastische Verformung der Rotorwelle 3 bzw. von Anfangs-12 und Endbereich 13 erfolgt durch Verstemmwerkzeuge 11, die in den Figuren durch Pfeile angedeutet sind.
Im nächsten Schritt (Figur 1b) wird ein zweites Modul 9, das ebenfalls mehrere Blechlaminate 5 umfaßt, mit Spiel auf die Rotorwelle 3 aufgeschoben und bspw. zur Anlage an das erste Modul 8 gebracht.
Danach wird wieder in dem Endbereich 13 des zweiten Moduls 9 eine Befestigung zwischen zumindest einem Blechlaminat 5 und der Rotorwelle 3 mittels des Verstemmwerkzeugs 11 hergestellt.
Dieser Schritt kann noch mehrere Male wiederholt werden, wie es auch in Figur 1c gezeigt ist, bei der noch ein drittes Modul 10 auf der Rotorwelle 3 angeordnet und im Endbereich 13 befestigt ist.
Der erfindungsgemäße Anker 1 besteht aus mehreren Modulen 8, 9, 10, die ein Blechpaket 7 darstellen und jeweils für sich auf der Rotorwelle 3 befestigt sind. Die Module 8, 9, 10 können auch mit einem gewissen Abstand auf der Rotorwelle 3 befestigt sein.

Figur 2 zeigt einen axialen Querschnitt durch einen erfindungsgemäßen Anker 1 gemäß Figur 1c.
Der erfindungsgemäße Anker 1 besteht bspw. aus drei Modulen 8, 9 und 10. Jedes Modul 8, 9, 10 besteht aus dem Anfangsbereich 12 und dem Endbereich 13, zwischen denen der mittlerer Bereich 14 vorhanden ist. Der Anfangsbereich 12 besteht aus zumindest einem Blechlaminat 5, der auf der Rotorwelle 3 befestigt ist.
Der Anfang- 12 und Endbereich 13 der Module 8, 9, 10 wird also durch einen Befestigungsbereich 16 oder einen Verstemmbereich 16, wenn die Befestigung durch Verstemmen erfolgt, auf der Rotorwelle 3 gehalten, der aus einem (Fig. 2) oder mehreren Blechlaminaten 5 besteht. Der mittlere Bereich 14 wird durch den in axialer Richtung wirkenden Kraftschluß zwischen Anfangsbereich 12 und Endbereich 13 gehalten. Die Blechlaminate 5 des mittleren Bereichs 14 bilden keinen Kraftschluss mit der Rotorwelle 3, der ausreichen würde, die Blechlaminate 5 auf der Rotorwelle 3 bei hohen Drehzahlen zu halten.
Das zweite Modul 9 hat ebenfalls einen Anfangsbereich 12, einen mittleren Bereich 14 und einen Endbereich 13. Der Endbereich 13 des ersten Moduls 8 kann auch gleichzeitig den Anfangsbereich 12 des zweiten Moduls 9 bilden, auch wenn dieser nur aus einem Blechlaminat 5 besteht.
So bildet auch der Endbereich 13 des zweiten Moduls 9 zugleich den Anfangsbereich 12 des dritten Moduls 10. Insbesondere bei langen Blechpaketen, d.h. bei einer sehr großen Anzahl von Blechlaminaten 5, ist dieser modulare Aufbau von Vorteil. Auch bei sehr hohen Drehmomenten, die auf die Blechlaminate im mittleren Bereich 14 wirken, kommt es zu keiner Verschiebung der Blechlaminate 5 in diesen Bereichen 14.
Die Anzahl der Blechlaminate 5 für ein Modul 8, 9, 10, die Lage der Module 8, 9, 10 zueinander kann frei gewählt werden.
Ebenso können Blechlaminate 5 verdreht sein, um eine Unwucht zu reduzieren.

## Patentansprüche

1. Anker für eine elektrische Maschine, zumindest bestehend aus einer Rotorwelle, und zumindest fünf Blechlaminaten, wobei zumindest drei Blechlaminate auf der Rotorwelle befestigt sind, wobei zumindest drei Blechlaminate (5) ein Modul (8, 9, 10) bilden, und mehrere Module (8, 9, 10) auf der Rotorwelle (3) angeordnet sind, und jedes Modul (8, 9, 10) einen Anfangsbereich (12), einen mittleren Bereich (14) und einen Endbereich (13) aufweist, und nur der Anfangs (12)- und Endbereich (13) des Moduls (8, 9, 10) auf der Rotorwelle (3) befestigt sind, während der mittlere Bereich (14) mit Spiel auf der Rotorwelle (3) angeordnet ist, wobei der Endbereich (13) eines ersten Moduls (8, 9, 10) gleichzeitig den Anfangsbereich (12) eines zweiten Moduls (8, 9, 10) bildet, wobei die Befestigung des Anfangs- (12) und Endbereichs (13) durch plastische Verformung der Rotorwelle (3) befestigt wird.

2. Anker nach Anspruch 1, **dadurch gekennzeichnet, dass** Verformen von zumindest einem Blechlaminat (5) hergestellt ist.

3. Anker nach Anspruch 1, **dadurch gekennzeichnet, dass** die Blechlaminate (5) ungefähr den gleichen Innendurchmesser (di) aufweisen.

4. Anker nach Anspruch 1, **dadurch gekennzeichnet, dass** die Rotorwelle (3) nur einen Aussendurchmesser (d) aufweist.

5. Verfahren zur Herstellung eines Ankers mit einer Rotorwelle und auf der Rotorwelle angeordneten Blechlaminaten, **dadurch gekennzeichnet, dass** mehrere Blechlaminate (5) zu einem ersten Modul (8) zusammengefasst und mit Spiel auf die Rotorwelle (3) aufgeschoben werden, dass danach das erste Modul (8) nur an einem Anfangsbereich (12) und an einem Endbereich (13) auf der Rotorwelle (3) befestigt wird, und dass wenigstens ein weiters Modul (9, 10) auf der Rotorwelle (3) mit Spiel aufgeschoben und jeweils an seinem Endbereich (13) auf der Rotorwelle (3) befestigt wird, wobei der Endbereich (13) eines ersten Moduls (8, 9, 10) gleichzeitig den Anfangsbereich (12) eines zweiten Moduls (8, 9, 10) bildet, wobei die Befestigung des Anfangs- (12) und Endbereichs (13) durch plastische Verformung der Rotorwelle (3) befestigt wird.

6. Verfahren zur Herstellung eines Ankers nach Anspruch 5,
**dadurch gekennzeichnet, dass** der Anfangs- (12) und der Endbereich (13) durch plastische Verformung mittels eines Verstemmwerkzeugs (11) auf der Rotorwelle (3) befestigt wird.

## Claims

1. Armature for an electrical machine, comprising at least one rotor shaft and at least five sheet-metal laminates, at least three sheet-metal laminates being fixed to the rotor shaft, at least three sheet-metal laminates (5) forming one module (8, 9, 10), and two or more modules (8, 9, 10) being arranged on the rotor shaft (3), and each module (8, 9, 10) having a start region (12), a central region (14) and an end region (13), and only the start (12) and end region (13) of the module (8, 9, 10) being fixed to the rotor shaft (3), whilst the central region (14) is arranged, with play, on the rotor shaft (3), the end region (13) of a first module (8, 9, 10) simultaneously forming the start region (12) of a second module (8, 9, 10), the start (12) and end region (13) being fixed by plastic deformation of the rotor shaft (3).

2. Armature according to Claim 1, **characterized in that** deformation of at least one sheet-metal laminate (5) is produced.

3. Armature according to Claim 1, **characterized in that** the sheet-metal laminates (5) have approximately the same internal diameter (di).

4. Armature according to Claim 1, **characterized in that** the rotor shaft (3) has only one external diameter (d).

5. Method for producing an armature having a rotor shaft and sheet-metal laminates arranged on the rotor shaft, **characterized in that** two or more sheet-metal laminates (5) are combined to form a first module (8) and are pushed, with play, onto the rotor shaft (3), **in that**, subsequently, the first module (8) is fixed to the rotor shaft (3) only at a start region (12) and an end region (13), and **in that** at least one further module (9, 10) is pushed, with play, onto the rotor shaft (3) and is fixed to the rotor shaft (3) in each case at its end region (13), the end region (13) of a first module (8, 9, 10) simultaneously forming the start region (12) of a second module (8, 9, 10), the start (12) and end region (13) being fixed by plastic deformation of the rotor shaft (3).

6. Method for producing an armature according to Claim 5, **characterized in that** the start (12) and the end region (13) are fixed to the rotor shaft (3) by plastic deformation by means of a crimping tool (11).

## Revendications

1. Induit pour moteur électrique, composé au moins d'un arbre de rotor, et d'au moins cinq laminés de tôle, au moins trois laminés de tôle étant fixés sur l'arbre de rotor, au moins trois laminés de tôle (5) formant un module (8, 9, 10), et plusieurs modules (8, 9, 10) étant disposés sur l'arbre de rotor (3), et chaque module (8, 9, 10) présentant une zone de début (12), une zone centrale (14) et une zone de fin (13), et seules les zones de début (12) et de fin (13) du module (8, 9, 10) étant fixées sur l'arbre de rotor (3), tandis que la zone centrale (14) est disposée avec un certain jeu sur l'arbre de rotor (3), la zone de fin (13) d'un premier module (8, 9, 10) formant simultanément la zone de début (12) d'un deuxième module (8, 9, 10), la fixation de la zone de début (12) et de la zone de fin (13) étant effectuée par déformation plastique de l'arbre de rotor (3).

2. Induit selon la revendication 1, **caractérisé en ce que** l'on effectue la déformation d'au moins un laminé de tôle (5).

3. Induit selon la revendication 1, **caractérisé en ce que** les laminés de tôle (5) présentent approximativement le même diamètre intérieur (di).

4. Induit selon la revendication 1, **caractérisé en ce que** l'arbre de rotor (3) ne présente qu'un diamètre extérieur (d).

5. Procédé de fabrication d'un induit doté d'un arbre de rotor et de laminés de tôle disposés sur l'arbre de rotor, **caractérisé en ce que** plusieurs laminés de tôle (5) sont regroupés en un premier module (8) et sont insérés sur l'arbre de rotor (3) avec un certain jeu, **en ce qu'**ensuite le premier module (8) est fixé sur l'arbre de rotor (3) uniquement au niveau d'une zone de début (12) et d'une zone de fin (13), et **en ce qu'**au moins un module supplémentaire (9, 10) est inséré sur l'arbre de rotor (3) avec un certain jeu et est respectivement fixé sur l'arbre de rotor (3) au niveau de sa zone de fin (13), la zone de fin (13) d'un premier module (8, 9, 10) formant simultanément la zone de début (12) d'un deuxième module (8, 9, 10), la fixation de la zone de début (12) et de la zone de fin (13) étant effectuée par déformation plastique de l'arbre de rotor (3).

6. Procédé de fabrication d'un induit selon la revendication 5, **caractérisé en ce que** les zones de début (12) et de fin (13) sont fixées sur l'arbre de rotor (3) par déformation plastique au moyen d'un outil de matage (11).
